# EUROPÄISCHE PATENTSCHRIFT

(11) **EP 0 974 255 B1**
(45) Veröffentlichungstag und Bekanntmachung des Hinweises auf die Patenterteilung: **22.01.2003**
(21) Anmeldenummer: 99113753.0
(22) Anmeldetag: 14.07.1999
(51) Int. Cl.: A01D 34/53

(54) **Schneckenmäher**
Spindle mower
Faucheuse hélicoidale

(30) Priorität: 20.07.1998 DE 19832525
(43) Veröffentlichungstag der Anmeldung: 26.01.2000
(73) Patentinhaber: Maschinenfabrik Bermatingen GmbH & Co., D-88697 Bermatingen (DE)
(72) Erfinder: Fleck, Alfons, 88697 Bermatingen (DE)
(74) Vertreter: Engelhardt, Guido, Dipl.-Ing.

(56) Entgegenhaltungen:
- EP-A- 0 328 080
- EP-A- 0 800 891
- DE-A- 3 528 372
- DE-U- 29 703 498
- FR-A- 2 557 420
- US-A- 3 054 247

## Beschreibung

Die Erfindung bezieht sich auf einen Schneckenmäher mit einem auf einer angetriebenen Messerwelle angeordneten Schneidmesser, das aus einer in Form einer Schnecke ausgebildeten Scheibe und einer Vielzahl an dieser auswechselbar angebrachter, mit Zähnen versehener Schneidstücken besteht.

Durch die EP 0 328 080 B1 ist ein Walzenmäher bekannt, dessen Messerwelle mit einem oder mehreren Schneidmessern der vorgenannten Art bestückt ist. Die Schneidstücke sind hierbei mit einer Feinverzahnung versehen, so daß jeweils nur eine Schneidkante, und zwar die im äußeren Bereich der Messerwelle etwa in Achsrichtung verlaufende Kante als Schneide wirksam ist. Der Verschleiß an den Schneidstücken ist demnach außerordentlich groß, so daß oftmals bereits nach kurzer Zeit ein Austausch der Schneidstücke vorzunehmen ist. Dies ist nicht nur sehr zeitaufwendig, sondern erfordert auch hohe Unterhaltskosten. Des weiteren ist von Nachteil, daß die Zähne der Schneidstücke nicht oder nur unzureichend nachgeschliffen werden können, da ein Schleifwerkzeug nur in Umfangsrichtung auf die Zähne einwirken kann.

Aufgabe der Erfindung ist es daher, einen Schneckenmäher der eingangs genannten Gattung zu schaffen, bei dem nicht nur eine optimale Schneidwirkung gegeben ist, in dem das gemähte Gut zusätzlich zerkleinert wird, sondern dessen Schneidkanten auch eine außerordentlich hohe Standzeit aufweist. Außerdem sollen die Zähne der Schneidstücke ohne Schwierigkeiten mehrfach nachgeschliffen werden können, so daß bei sehr geringem Fertigungsaufwand ein wirtschaftlicher Einsatz des Schneckenmähers ermöglicht wird.

Gemäß der Erfindung wird dies bei einem Schneckemäher der eingangs genannten Art dadurch erreicht, daß zwischen den einzelnen Zähnen der Schneidstücke jeweils ein Freiraum in die Schneidstücke eingearbeitet ist, der etwa dreieckförmig gestaltet ist, und daß die einander benachbarten Zähne der Schneidstücke etwa um deren Materialstärke seitlich geschränkt sind und die drei dadurch gebildeten in Drehrichtung der Messerwelle vorderen Kanten der Zähne als Schneidkanten wirken.

Zweckmäßig ist es hierbei, die in Drehrichtung der Messerwelle vorderen Flächen der Zähne konkav gekrümmt und deren hinteren Flächen als plane Rückenflächen auszubilden, wobei die Rückenflächen der Zähne etwa tangential zu dem lichten Innendurchmesser der Schneidstücke als Grundkreis verlaufend ausgerichtet sein sollten.

Sehr vorteilhaft ist es des weiteren, die Zähne auf der in Drehrichtung der Messerwelle rückwärtigen Seite jeweils mit einer in die plane Rückenfläche übergehenden und mit Abstand zu der als Schneidkante ausgebildeten Vorderkante der Zähne beginnenden Freischnittfläche zu versehen, die etwa um einen Winkel von 5° bis 12° gegenüber der planen Stirnfläche der Zähne geneigt verlaufend ausgebildet sein sollte. Dadurch wird die Schneidwirkung der durch die Vorderkanten der Zähne gebildeten Schneidkanten gesteigert und die Reibung der Außenmantelfläche der Messerwelle reduziert.

Wird ein Schneckenmäher gemäß der Erfindung ausgebildet, so ist nicht nur die Gewähr gegeben, daß trotz der hohen Umfangsgeschwindigkeit der Messerwelle keine Steine oder andere harte Gegenstände weggeschleudert werden, diese werden vielmehr von Zahn zu Zahn, die versetzt zueinander in Fahrtrichtung umlaufen, seitlich nach außen transportiert, sondern daß auch ein störungsfreier Betrieb über einen langen Zeitraum gewährleistet ist. Durch die zwischen den einzelnen Zähnen in die Schneidstücke eingearbeiteten Freiräume werden nämlich an den Zähnen der Schneidstücke jeweils drei Schneidkanten geschaffen, durch die das Gras abgemäht und mehrfach zerkleinert, gewissermaßen gehächselt wird. Außerdem ist eine hohe Standzeit der Zähne gegeben, da deren drei Schneidkanten auf das Mähgut einwirken und somit von einer Schneidkante nur ein Teil des Grases zu mähen ist.

Des weiteren ist von Vorteil, daß die Zähne der Schneidstücke, da deren Schneidkanten gut zugänglich sind, problemlos mehrfach nachgeschliffen werden können, die einzelnen Schneidstücke können demnach über einen langen Zeitraum eingesetzt werden. Mit geringem Fertigungsaufwand ist somit durch die vorschlagsgemäße Ausgestaltung der Schneidstücke eine wesentliche Verbesserung der Arbeitsweise eines Schneckenmähers zu erzielen.

In der Zeichnung ist ein Ausführungsbeispiel eines gemäß der Erfindung ausgebildeten Schneckenmähers dargestellt, das nachfolgend im einzelnen eräutert ist. Hierbei zeigt:
- Figur 1: die Messerwelle eines Schneckenmähers, in Teilansicht,
- Figur 2: einen Schnitt nach der Linie II - II der Figur 1,
- Figur 3: eines der an der Messerwelle nach Figur 1 angebrachten Schneidstücke, in einer Abwicklung,
und
- Figur 4: das Schneidstück nach Figur 3 in Draufsicht im geschränkten Zustand.

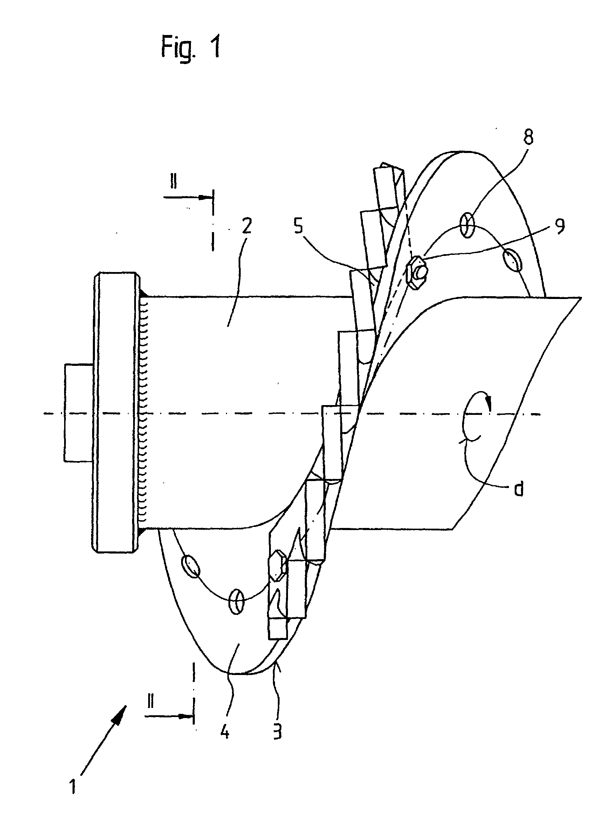

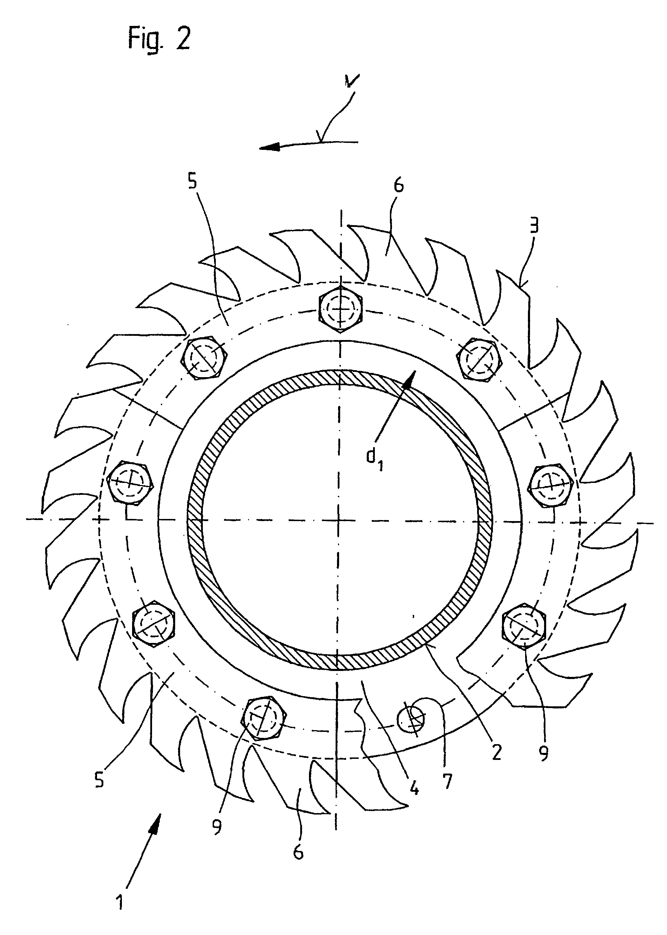

Der in Figur 1 teilweise dargestellte und mit 1 bezeichnete Schneckenmäher weist eine antreibbare Messerwelle 2 in Form einer Hohlwelle auf, an der ein Schneidmesser 3 angebracht ist. Das Schneidmesser 3 ist hierbei in Form einer als Schnecke gebogenen Scheibe 4 ausgebildet, die auf der Messerwelle 2 aufgeschweißt und mit einer Vielzahl von Schneidstücken 5, wie dies insbesondere der Figur 2 zu entnehmen ist, bestückt ist. Mit Hilfe von Schrauben 9, die in die Scheibe 4 und die Schneidstücke 5 eingearbeitete einander zugeordnete Bohrungen 7 und 8 durchgreifen, sind die mit Zähnen 6 versehenen Schneidstücke 5 auswechselbar an der Scheibe 4 befestigt.

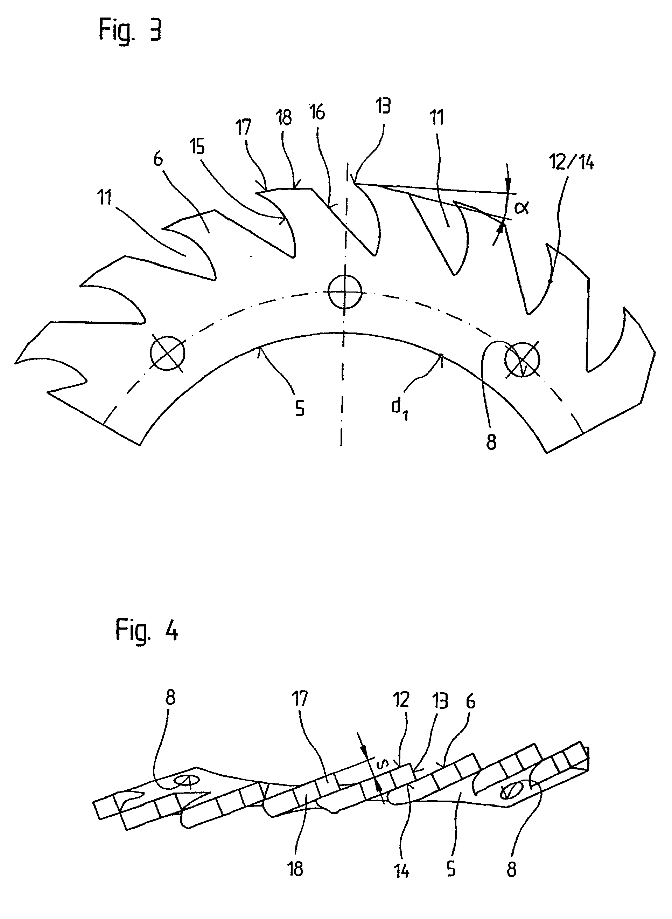

Die Zähne 6 der Schneidstücke 5 sind, wie dies in den Figuren 3 und 4 dargestellt ist, etwa um deren Materialstärke s geschränkt, außerdem ist zwischen den einzelnen Zähnen 6 jeweils ein etwa dreieckförmig gestalteter Freiraum 11 in die Schneidstücke 5 eingearbeitet, so daß die Zähne 6 mit Abstand zueinander angeordnet und in Drehrichtung v der Messerwelle 2 drei Schneidkanten 12, 13 und 14 aufweisen, mittels denen das Mähgut abgeschnitten und mehrfach zerkleinert wird. Die Standzeit der Schneidkanten 12, 13 und 14 ist somit sehr hoch.

Die in Drehrichtung v der Messerwelle 2 vorderen Flächen 15 der Zähne 6 sind hierbei konkav gekrümmt ausgebildet, deren Rückenflächen 16 sind dagegen plan tangential zu einem Grundkreis, der etwa dem lichten Durchmesser d₁ der Schneidstücke 5 entspricht, gestaltet. Des weiteren sind die planen Stirnflächen 17 der Zähne 6 jeweils mit einer Freischnittfläche 18 versehen, die unter einem Winkel von etwa 5° bis 12° gegenüber den Stirnflächen 18 geneigt verlaufen. Durch diese Maßnahme wird das Mähen weiter verbessert.

## Patentansprüche

1. Schneckenmäher (1) mit einem auf einer angetriebenen Messerwelle (2) angeordneten Schneidmesser (3), das aus einer in Form einer Schnecke ausgebildeten Scheibe (4) und einer Vielzahl an dieser auswechselbar angebrachter, mit Zähnen (6) versehener Schneidstücken (5) besteht,
**dadurch gekennzeichnet,**
**daß** zwischen den einzelnen Zähnen (6) der Schneidstücke (5) jeweils ein Freiraum (11) in die Schneidstücke (5) eingearbeitet ist, der etwa dreieckförmig gestaltet ist,
und **daß** die einander benachbarten Zähne (6) der Schneidstücke (5) etwa um deren Materialstärke (s) seitlich geschränkt sind und die drei dadurch gebildeten in Drehrichtung (v) der Messerwelle (2) vorderen Kanten der Zähne (6) als Schneidkanten (12, 13, 14) wirken.

2. Schneckenmäher nach Anspruch 1,
**dadurch gekennzeichnet,**
**daß** die in Drehrichtung (v) der Messerwelle (2) vorderen Flächen (15) der Zähne (6) konkav gekrümmt ausgebildet sind.

3. Schneckenmäher nach Anspruch 1 oder 2,
**dadurch gekennzeichnet,**
**daß** die in Drehrichtung (v) der Messerwelle (2) hinteren Flächen der Zähne (6) als plane Rückenflächen (16) ausgebildet sind.

4. Schneckenmäher nach Anspruch 3,
**dadurch gekennzeichnet,**
**daß** die Rückenflächen (16) der Zähne (6) etwa tangential zu dem lichten Innendurchmesser (d₁) der Schneidstücke (5) als Grundkreis verlaufend ausgerichtet sind.

5. Schneckenmäher nach Anspruch 4,
**dadurch gekennzeichnet,**
**daß** die Zähne (6) auf der in Drehrichtung (v) der Messerwelle (2) rückwärtigen Seite jeweils mit einer in die plane Rückenfläche (16) übergehenden und mit Abstand zu der als Schneidkante (13) ausgebildeten Vorderkante der Zähne (6) beginnenden Freischnittfläche (18) versehen sind.

6. Schneckenmäher nach Anspruch 5,
**dadurch gekennzeichnet,**
**daß** die Freischnittflächen (18) der Zähne (6) etwa um einen Winkel (α) von 5 bis 12° gegenüber den planen Stirnflächen (17) der Zähne (6) geneigt verlaufend ausgebildet sind.

## Claims

1. An auger-type mower (1) with a cutting blade (3) arranged on a driven blade shaft (2), in which the cutting blade (3) consists of a disc (4) in the form of a screw and of a plurality of cutter pieces (5) attached to the disc (4) in a replaceable arrangement, each of the cutter pieces (5) having teeth (6),
**characterised in that**,
a recess (11) is worked into the cutter pieces (5) between each of the teeth (6) of the cutter pieces (5), with the recesses (11) being approximately triangular in shape,
and that the adjacent teeth (6) of the cutter pieces (5) are set to the side by approximately the material thickness (s) of the cutter pieces (5) and the three front edges of the teeth (6) which are formed as a result in the direction of rotation (v) of the blade shaft (2) act as cutting edges (12, 13, 14).

2. The auger-type mower in accordance with Claim 1,
**characterised in that**,
the surfaces (15) of the teeth (6) which face forwards in the direction of rotation (v) of the blade shaft (2) are concave in shape.

3. The auger-type mower in accordance with Claim 1 or 2,
**characterised in that**,
the surfaces of the teeth (6) which face to the rear in the direction of rotation (v) of the blade shaft (2) are formed as flat rear surfaces (16).

4. The auger-type mower in accordance Claim 3,
**characterised in that**,
the rear surfaces (16) of the teeth (6) are arranged running approximately at a tangent to the clear inside diameter (d₁) of the cutter pieces (5) as a base circle.

5. The auger-type mower in accordance with Claim 4,
**characterised in that**,
each the teeth (6) on the side which faces to the rear in the direction of rotation (v) of the blade shaft (2) is provided with a recessed surface (18) which is adjacent to the flat rear surface (16) and starts at a distance from the front edge of the tooth (6) which is formed as a cutting edge (13).

6. The auger-type mower in accordance with Claim 5,
**characterised in that**,
the recessed surfaces (18) of the teeth (6) run at an angle (α) of 5 to 12° in relation to the flat end surfaces (17) of the teeth (6).

## Revendications

1. Tondeuse à vis sans fin (1) comprenant, disposé sur un arbre à couteau entraîné (2), un couteau (3) conçu sous la forme d'un disque en forme de vis sans fin (4), et d'un grand nombre de pièces coupantes (5) munies de dents (6), fixées de manière échangeable sur le disque (4),
**caractérisée en ce que**,
entre les dents individuelles (6) des pièces coupantes (5), il est prévu chaque fois dans les pièces coupantes (5) un espace libre (11) ayant à peu près la forme d'un triangle,
et que les dents voisines (6) des pièces coupantes (5) sont avoyées latéralement sur à peu près l'épaisseur (s) du matériel et que les trois bords des dents (6), formés vers l'avant dans le sens de rotation (v) de l'arbre à couteau (2), agissent en tant qu'arêtes (12, 13, 14).

2. Tondeuse à vis sans fin d'après la revendication 1,
**caractérisée en ce que**
les faces (15) des dents (6) formées vers l'avant dans le sens de rotation (v) de l'arbre à couteau (2), sont conçues sous la forme concave.

3. Tondeuse à vis sans fin d'après la revendication 1 ou 2,
**caractérisée en ce que**
les faces des dents (6) formées vers l'arrière dans le sens de rotation (v) de l'arbre à couteau (2), sont conçues sous la forme de faces dorsales planes (16).

4. Tondeuse à vis sans fin d'après la revendication 3,
**caractérisée en ce que**
les faces dorsales (16) des dents (6) sont alignées à peu près tangentiellement par rapport au diamètre intérieur libre (d₁) des pièces coupantes (5), de sorte à ce qu'elles forment un cercle de base.

5. Tondeuse à vis sans fin d'après la revendication 4,
**caractérisée en ce que**
sur leur face arrière dans le sens de rotation (v) de l'arbre à couteau (2), les dents (6) sont munies respectivement d'un plan de découpe (18) se transformant progressivement en la face dorsale plane (16) et commençant à une certaine distance du bord avant des dents (6) conçu sous la forme d'une arête (13).

6. Tondeuse à vis sans fin d'après la revendication 5,
**caractérisée en ce que**
les plans de découpe (18) des dents (6) sont disposés inclinés sous un angle (α) d'environ 5 à 12° par rapport aux faces frontales planes (17) des dents (6).
